# EUROPEAN PATENT SPECIFICATION

(11) **EP 4 129 818 B1**
(45) Date of publication and mention of the grant of the patent: **09.10.2024**
(21) Application number: 21189469.6
(22) Date of filing: 03.08.2021
(51) Int. Cl.: B64C 1/10

(54) **AN AIRCRAFT OR SPACECRAFT FUSELAGE WITH A STRUCTURAL JUNCTION**
FLUGZEUG- ODER RAUMFAHRZEUGRUMPF MIT EINER STRUKTURELLE VERBINDUNG
UN FUSELAGE D'AÉRONEF OU D'ENGIN SPATIAL AVEC UNE JONCTION STRUCTURELLE

(43) Date of publication of application: 08.02.2023
(73) Proprietor: Airbus Operations GmbH, 21129 Hamburg (DE)
(72) Inventor: BONNET, Mathieu, 21129 Hamburg (DE); NOEBEL, Torsten, 21129 Hamburg (DE); DRESEL, Andreas, 21129 Hamburg (DE)
(74) Representative: Isarpatent

(56) References cited:
- EP-A1- 2 540 615
- EP-A1- 2 759 467
- WO-A2-2011/042511
- US-A1- 2010 243 806
- US-A1- 2011 024 563
- US-A1- 2012 186 062

## Description

### FIELD OF THE INVENTION

The invention relates to an aircraft or spacecraft fuselage, the fuselage including a structural junction; and to an aircraft or spacecraft, in particular an aeroplane, comprising a fuselage including a structural junction. Further, the invention relates to a method of forming a structural junction in an aircraft or spacecraft fuselage, in particular in a fuselage of an aeroplane.

### TECHNICAL BACKGROUND

Although the invention may be useful in various applications in the field of aircraft or spacecraft design and production, the invention and the underlying problem will be explained in the following in greater detail and exemplary manner with regard to a pressure bulkhead interface as part of a fuselage of an airplane, in particular near the tail of such a fuselage.

In passenger aeroplanes, a large portion of the fuselage commonly accommodates a pressurized passenger cabin. It is known to terminate the pressurized portion of the fuselage at its rearward end by a pressure bulkhead, which separates the pressurized portion of the fuselage from a rear fuselage portion that is unpressurized.

EP2759467A1 and US2010/243806A1 discloses aircraft structures with pressure bulkheads.

DE 10 2009 035 265 A1 and US 2011/0024563 A1, for instance, describe a pressure fuselage of an aircraft or spacecraft, assembled from several fuselage sections, and describe an arc-shaped frame profile having a Y-shaped cross section for attaching a pressure calotte on the inside of an associated fuselage section.

In DE 10 2007 052 140 A1 and US 2011/0233334 A1, a fuselage structure of an aircraft or spacecraft is described, wherein a plurality of tension struts each connect a pressure calotte to a skin portion.

Moreover, RU 2 472 670 C1 describes a pressure bulkhead located at a junction of fuselage compartments, wherein fittings on opposite sides of the pressure bulkhead, a wall of an outer belt bridging the junction between skins of the fuselage compartments and having an outer contour close to the shape of these skins at the junction, a wall of the pressure bulkhead, and a backup tape are connected by a bolted connection.

In conventional approaches to implementing an orbital junction at the rear pressure bulkhead interface, loads between adjacent fuselage sections are transmitted mainly as shear loads e.g. using fasteners such as rivets. However, such conventional designs usually entail a comparatively complex, time-consuming assembly process, involving a significant number of separate parts that must be individually assembled. Accessibility during assembly may be complex, which can contribute to a lengthy and expensive process.

Against this background, it would be desirable to provide a reliable structural junction in the region where a pressure bulkhead, particularly a rear pressure bulkhead, is to be coupled to a fuselage skin and/or a stiffening structure thereof, and at the same time to make it possible to facilitate the assembly of fuselage sections in the part of the fuselage concerned and to reduce assembly lead time. Further, it would be preferable to be able to perform significant pre-assembly of fuselage sections, to be placed adjacent the pressure bulkhead interface, in a simple manner.

### SUMMARY OF THE INVENTION

In view of this, the problem to be solved by the invention is to provide a structural junction that can be assembled in improved manner and thereby to reduce assembly lead time. Further, a correspondingly improved method of forming a structural junction, and a correspondingly improved aircraft or spacecraft, are to be proposed.

According to the invention, this problem is solved by a fuselage as claimed in claim 1 and/or by an aircraft or spacecraft having the features of claim 12 and/or by a method of forming a structural junction in an aircraft or spacecraft fuselage having the features of claim 13.

An idea underlying the invention is that using the first and second fittings and tension bolts, a component integrally overlapping the joint between fuselage sections, forward and aft of the pressure bulkhead, connecting these fuselage sections based on a shear attachment principle, e.g. by riveting, at the level of the fuselage skin in both skin portions and transmitting tensile loads along the skin and across the joint, can be avoided.

For instance, therefore, pre-assembly of each of the first and second sections is possible even when the fuselage tapers, such as towards the tail of an airplane.

Moreover, by providing a first and second fitting and transmitting tensile loads using the tension bolts, geometrically overly complex components can be avoided, and the fittings can be manufactured with reasonable effort.

Furthermore, as the inner flange is spaced apart from the fuselage skin, an offset between the pressure bulkhead skin and the fuselage skin is provided, which may be advantageous. System lines such as cables, tubes, or the like can be led from a pressurized to an unpressurized fuselage section, or vice versa, without necessarily penetrating the pressure bulkhead skin, for example.

The structural junction proposed by the invention thus makes it possible to pre-assemble both first and second fuselage sections before joining them. Therefore, the assembly lead time can be reduced. Also, less parts have to be assembled at least during joining the sections, the access for workers during the assembly process is significantly improved, and the required operations can be performed in a more ergonomic manner, which further reduces time and effort required for assembly.

In the present invention, the tension bolts can transfer at least tensile loads, which should be understood to encompass in particular implementations in which the tension bolts transfer substantially only tension loads as well as implementations in which the tension bolts transfer both shear and tension loads, for example.

Advantageous improvements and developments of the invention are contained in the dependent claims as well as in the description referring to the drawings.

In particular, an outer surface of the first outer flange may abut against an inner surface of the fuselage skin in the first section, and an outer surface of the second outer flange may abut against an inner surface of the fuselage skin in the second section. For example, the first outer flange may be attached to the portion of the fuselage skin in the first section using fasteners, such as e.g. rivets, and/or the second outer flange may be attached to the portion of the fuselage skin in the second section using fasteners, such as e.g. rivets. In this manner, the outer flanges can be attached to the fuselage skin in the associated fuselage section in a reliable manner and so as to transmit shear loads from the outer flange to the associated portion of the fuselage skin.

In a development, the inner flange of the first fitting obliquely extends with respect to the first web to which it is connected. In this manner, the pressure bulkhead skin formed as, for example, a pressure calotte can be conveniently and reliably attached to the inner flange.

In particular, the pressure bulkhead skin may be arranged in such a manner that an edge portion of the pressure bulkhead skin overlaps with the inner flange. Further preferably, the pressure bulkhead skin may be attached to the inner flange using fasteners, such as for example rivets. In this way, a reliable attachment of the pressure bulkhead skin to the inner flange is obtained.

According to a development, preferably, the first fitting is integrally formed with the inner flange thereof. This may help to reduce weight and simplifies pre-assembly of the first fuselage section.

In a development, the first web, the first outer flange and the inner flange of the first fitting are formed integrally with each other. In a further development, the second web and the second outer flange of the second fitting are formed integrally with each other. In this way, structural weight can be limited or reduced, and furthermore, these developments may contribute to a space-saving design of the first and second fitting, respectively.

In particular, the first web of the first fitting and the second web of the second fitting extend substantially parallel to each other and/or contact each other along a first main surface of the first web and a second main surface of the second web. In this way, the fittings can be reliably connected by the plurality of tension bolts.

In accordance with an improvement, the tension bolts each extend through the first web and through the second web in such a manner as to join the first and second webs, wherein in a state in which the first and second fittings are connected at least by the tension bolts, the first and second webs abut against each other and the inner flange of the first fitting preferably extends over an inner end of the second web of the second fitting. Accordingly, the fittings can be reliably connected, while access to the location where the connection via the tension bolts is to be established is facilitated. In particular, with the inner flange preferably extending over the inner end of the second web, access to the location where the pressure bulkhead skin is to be attached to the first fitting can be facilitated during pre-assembly of the first fuselage section.

In particular, a location at which the fuselage skin portions of the first and second fuselage sections adjoin each other substantially corresponds to a location where the first and second webs abut against each other. In this way, pre-assembly of the fuselage sections is significantly facilitated also if the fuselage tapers, for example following a curved profile, in the region of the joint between the fuselage sections. A slight gap may exist between adjacent edges of the skin portions.

In particular, the first web and the first outer flange may form legs of an L-shaped section of the first fitting and/or the second web and second outer flange may form legs of an L-shaped profile of the second fitting.

Further, in accordance with an improvement, the first fitting comprises a plurality of first ribs arranged transverse to the first web and the first outer flange and/or the second fitting comprises a plurality of second ribs arranged transverse to the second web and the second outer flange. In accordance with this improvement, the first and/or second ribs are arranged along a circumferential direction of the fuselage, in the region where the first and second fuselage sections are joined, so as to form pairs of first and/or second ribs. In this manner, further support between the web and outer flange may be provided in each case, the connection of the first web and first outer flange and/or of the second web and second outer flange can be additionally stiffened and loads may be transmitted more effectively between the webs and outer flanges.

Preferably, the first ribs and the second ribs are formed at corresponding locations along the circumferential direction. Further preferably, a tension bolt is arranged in a region of the first and second webs between the ribs of one of the pairs. Thus, the ribs can contribute in a particularly effective manner to support the loads transmitted by the tension bolts.

In a development, at least the first fuselage section further comprises a plurality of stringers arranged spaced from each other along the circumferential direction of the fuselage, a longitudinal axis of each of the stringers being oriented substantially transverse to the first fitting, wherein a position of each of the stringers along the circumferential direction substantially corresponds to a circumferential position of one of the pairs of ribs. Hence, loads can be supported even more efficiently by the stiffening structure stiffening the fuselage skin.

According to a development, the pairs of first ribs and the pairs of second ribs each are spaced from one another in the circumferential direction, whereby intermediate regions of the first and second webs between consecutive pairs of ribs are defined, wherein the first and second webs are additionally joined in the intermediate regions in a manner essentially transmitting shear between the first and second webs. Hence, additional shear load can be transmitted between the first and second fittings.

In a development, the tension bolts are configured to connect the first and second fittings using a threaded connection. Such a connection is well adapted to the transmission of tensile loads. With such a connection, assembly can be performed in expedient manner.

In particular, the first and second fittings are manufactured as separate parts which are, during assembly of the fuselage, connected to each other at least by the tension bolts. In particular, the first fitting and the second fitting are parts which are configured to be structurally connected to each other at least by the tension bolts, wherein the first and second fittings and the tension bolts are configured in a manner enabling the tension bolts to transmit tensile loads or to transmit tensile loads and shear loads.

In a further development, the first fitting and/or the second fitting is/are each formed elongate and in particular is/are arranged in such a manner as to substantially extend along a circumferential direction of the fuselage.

Moreover, in an improvement, the first fuselage section comprises a frame arranged next to the first fitting and in such a manner as to extend substantially along a circumferential direction of the fuselage, wherein the frame is arranged spaced from the first fitting by a distance and is connected to the first fitting at a plurality of locations along the circumferential direction, in particular by a plurality of cleats bridging the distance between the frame and the first fitting. Connecting the first fitting with the frame in this manner contributes to preventing the frame from deforming in undesirable manner.

In a further development the first fitting can be formed integrally with the frame. In particular, in this development, the cleats can be formed integrally with the frame and the first fitting. In this way, the weight of the junction can be reduced further.

In another development, the frame, the first fitting and the cleats can be formed as separate parts that are joined during assembly of the first fuselage section. In this manner, the production of the frame, the first fitting and the cleats can facilitated.

In still another development, the cleats can be formed integrally with either the frame or the first fitting. Thereby, some reduction in weight can be achieved along with moderate complexity of the components to be produced.

In another development, the cleats each connect a web of the frame to an assigned one of the ribs of the first fitting. In this way, the shape of the cleats can be kept relatively simple, while the connections with both the web and rib can be established in expedient manner. In particular, cleats each having an L-type shape may be used.

In particular, the improvements, developments and enhancements of the invention described above may be applied in analogous manner to each of the structural junction, the aircraft or spacecraft, and the method proposed herein.

### BRIEF DESCRIPTION OF THE DRAWINGS

The invention will be explained in the following with reference to the schematic figures of the drawings which illustrate embodiments of the invention. Herein:
- Fig. 1: displays a side view of an aircraft which comprises a structural junction according to an embodiment of the present invention;
- Fig. 2: displays a perspective view of another aircraft which comprises a structural junction according to an embodiment of the present invention, as well as a detail perspective view illustrating a rear pressure bulkhead region;
- Fig. 3: displays a perspective schematic view of a structural junction according to an embodiment of the invention;
- Fig. 4: displays a perspective schematic detail view of the structural junction according to the embodiment of Fig. 3;
- Fig. 5: shows a schematic longitudinal sectional view of the structural junction according to the embodiment of Fig. 3;
- Fig. 6: shows a schematic front view of several components of the structural junction of the embodiment of Fig. 3;
- Fig. 7: schematically shows the joining of two fuselage sections during fuselage assembly and formation of the structural junction of the embodiment of Fig. 3;
- Fig. 8: shows a schematic block diagram illustrating steps of a method according to an embodiment; and
- Fig. 9: shows another perspective view of the structural junction according to the embodiment of Fig. 3.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitely stated otherwise.

### DETAILED DESCRIPTION OF EMBODIMENTS

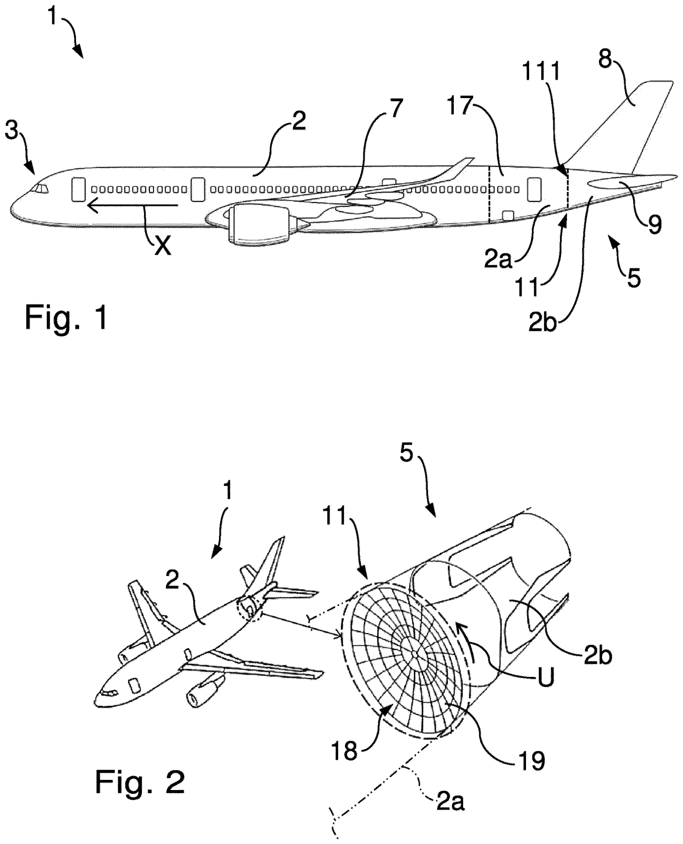

Figs. 1 and 2 illustrate an aircraft in the form of a passenger aeroplane 1, comprising a fuselage 2 having a nose 3 and a tail 5, wings 7 as well as a vertical stabilizer 8 and horizontal stabilizer 9 in the region of the tail 5. The fuselage 2 is constructed, for example, according to a semi-monocoque design, generally comprising an outer skin 17 reinforced on the inner side thereof by a reinforcing structure including stringers, which are essentially longitudinally arranged, as well as frames essentially extending transverse to the stringers. The fuselage 2 is divided into several barrel-shaped sections, which are assembled to form the entire fuselage 2. A fuselage section may be formed from several shells.

The aircraft 1 comprises a passenger cabin, not shown in detail in the figures, throughout a large part of the fuselage 2. The passenger cabin is designed to accommodate the passengers. In order to provide the passengers with a suitable, safe and comfortable environment for travel at great height above ground, a large part of the fuselage 2 can be pressurized. The pressurized fuselage portion is closed, near the tail 5, by a rear pressure bulkhead 18, displayed in Fig. 2. The rear pressure bulkhead 18 comprises a pressure bulkhead skin 19 or membrane, which may be shaped in the manner of a cap or calotte.

Figs. 1 and 2 show first and second fuselage sections 2a and 2b near the tail 5. The forward section 2a and the rearward section 2b are joined at an orbital joint or orbital structural junction 11 situated substantially at the position of the rear pressure bulkhead 18. The first fuselage section 2a, forward of the bulkhead 18, is thus a pressurizable section, while the second fuselage section 2b, rearward of the bulkhead 18, is unpressurized. Other sections in the direction towards the nose 3 of the airplane 1 are not shown in detail in Figs. 1, 2.

In the embodiment displayed in the figures, the first and second fuselage sections 2a, 2b can each be pre-assembled and then joined at the position indicated by reference numeral 111, which designates the location of the joint. Thereby, it is in particular made possible to achieve at reduction in assembly lead time.

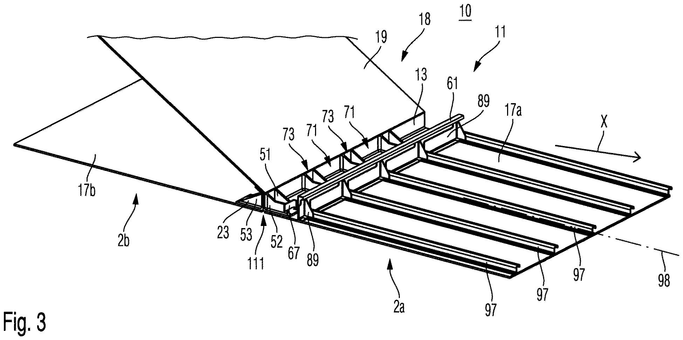

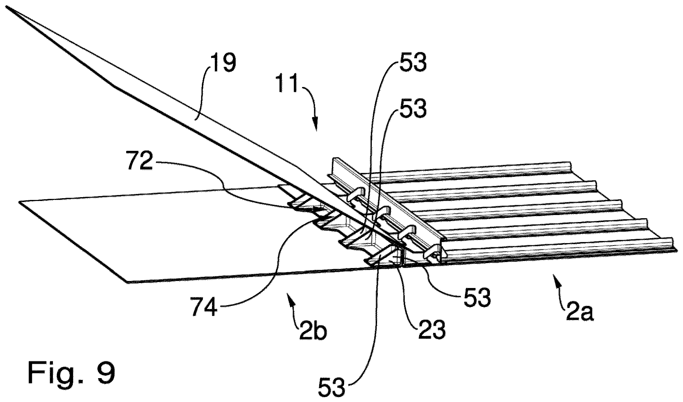

The orbital structural junction 11 according to an embodiment will be described in the following in greater detail in particular with reference to Figs. 3-6 and 9.

Fig. 3 shows a perspective view of a part of the junction 11, in a schematic manner. In particular in a direction U along the circumference of the fuselage 2, only a portion of the junction 11 is shown. Further, along the longitudinal direction X of the completed fuselage 2, for the sake of clarity, only adjacent portions of the first and second sections 2a and 2b are displayed, while the sections 2a, 2b may typically be longer than the parts displayed in the figures.

Also, it should be understood that - while Figs. 3-6, 9 show the junction 11 in a schematic manner in the form of a development in the circumferential direction U of the fuselage 2 at the location 111 of the junction 11 - the sections 2a and 2b have a generally round cross-section and are joined at the location 111 along a closed curve.

The first section 2a comprises a outer skin portion 17a, while the second section 2b comprises an outer skin portion 17b. The skin portions 17a, 17b form, in cooperation with each other and with further skin portions in other sections, the outer skin 17 of the fuselage 2 after assembly of the latter.

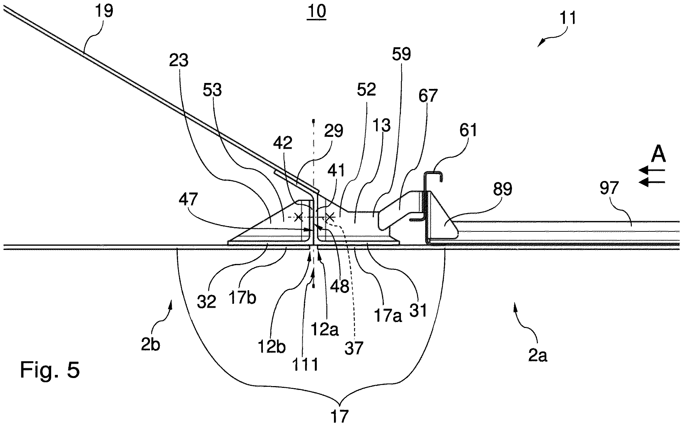

In the orbital structural junction 11 of the embodiment, a first fitting 13 is attached to the fuselage skin portion 17a in the first fuselage section 2a, and a second fitting 23 is attached to the fuselage skin portion 17b in the second fuselage section 2b. Adjacent, opposing edges 12a, 12b of the skin portions 17a and 17b, respectively, are shown in Fig. 5 in greater detail. The edges 12a and 12b each form adjacent edges of the fuselage sections 2a and 2b, respectively, or parts thereof, and in the region of these edges of the sections 2a, 2b, the sections 2a and 2b are joined at the location 111.

The first fitting 13 is attached to the skin portion 17a close to the edge 12a of the portion 17a, while the second fitting 23 is attached to the skin portion 17b close to the edge 12b of the portion 17b. Fitting 13 may protrude beyond the edge 12a by a small distance, and fitting 23 may protrude beyond the edge 12b by a small distance, thus forming a small gap between the edges 12a, 12b in the assembled state as shown in Fig. 5.

Each of the first and second fittings 13, 23 substantially extends along the adjacent edges 12a, 12b in the circumferential direction U of the fuselage 2 and each are formed according to a generally elongate shape.

The first fitting 13 comprises a first outer flange 31. An outer surface of the outer flange 31 abuts against an inner surface of the skin portion 17a. Via the first outer flange 31, the first fitting 13 is joined to the skin portion 17a, for example using a plurality of fasteners, such as rivets. Moreover, the first fitting 13 comprises a first web 41, arranged substantially transverse to the first outer flange 31. In the embodiment shown, the first web 41 extends substantially perpendiculary to the first outer flange 31. In cooperation, the web 41 and outer flange 31 form an L-shape in the cross-section of the first fitting 13, the web 41 and flange 31 forming legs of the L-shape. In variants, the angle between the first web 41 and first outer flange 31 may differ from 90 degrees.

In addition, the first fitting 13 comprises an inner flange 29. The first web 41 connects the inner flange 29 and the first outer flange 31. Furthermore, the inner flange 29 and the first outer flange 31 extend from opposing ends of the first web 41 into different directions, with the inner flange 29 obliquely extending with respect to the first web 41.

The first outer flange 31, the first web 41 and the inner flange 29 are formed integrally with each other. For example, the first fitting 13 may be formed by machining, e.g. by milling, whereby the flanges 31, 29 and the web 41 may be formed as integral portions of the first fitting 13.

The second fitting 23 comprises a second outer flange 32, an outer surface of which abuts against an inner surface of the skin portion 17b. Via the second outer flange 32, the second fitting 23 is joined to the skin portion 17b, for example using a plurality of fasteners, such as rivets. The second fitting 23 comprises a second web 42, arranged transverse to the second outer flange 32 and connected to the second outer flange 32. In the embodiment displayed in the figures, the second web 42 extends substantially perpendicularly to the second outer flange 32. In cooperation, the web 42 and outer flange 32 form an L-shape in the cross-section of the second fitting 23, the web 42 and flange 32 forming legs of the L-shape. In variants, the angle between the second web 42 and the second outer flange 32 may differ from 90 degrees.

Fig. 5, for example, shows that in the assembled state, the L-shapes of the first and second fittings 13, 23 are arranged in a substantially symmetric manner with respect to the surface defining, in Fig. 5, the location 111 where both sections 2a, 2b are joined.

In a manner analogous to the first fitting 13, the second outer flange 32 and the second web 42 are formed integrally with each other in the second fitting 23. For example, the second fitting 23 may be formed by machining, e.g. by milling, whereby the flange 32 and the web 42 may be formed as integral portions of the second fitting 23.

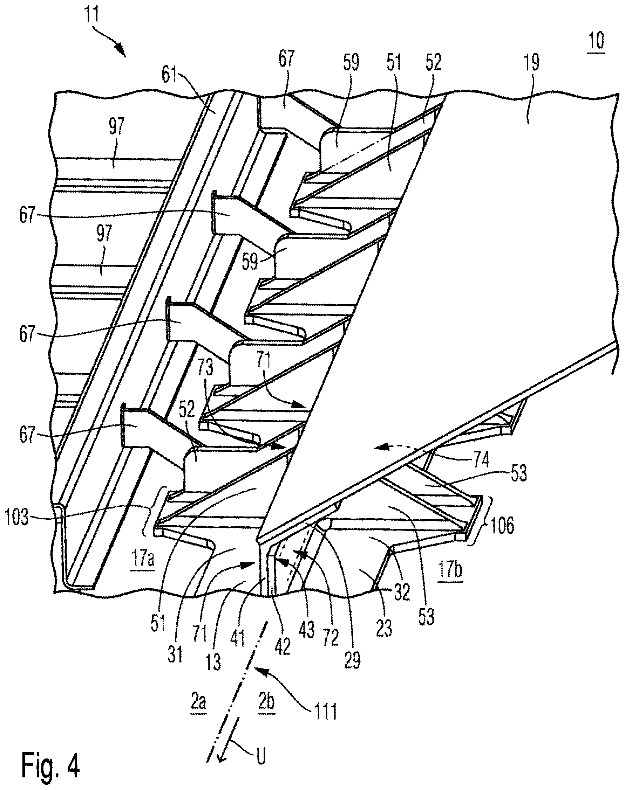

After assembly of the fuselage 2, the outer fuselage skin 17 encloses an inner space 10 of the fuselage 2. In the junction 11, the inner flange 29 of the first fitting 13 is spaced apart from the fuselage skin 17 towards the inner space 10 of the fuselage 2 by a distance substantially defined by the height of the first web 41 with respect to the outer surface of the first outer flange 31, see for example Figs. 4 and 5.

The pressure bulkhead skin 19 is connected, in a circumferential region along its outer edge, to the inner flange 29. Figs. 4, 5 in particular show that an edge portion of the pressure bulkhead skin 19 overlaps with the inner flange 29 and is attached thereto, for example using fasteners such as rivets, not shown in the figures. As the inner flange 29 is obliquely inclined relative to the first web 41, and hence in particular is also inclined with respect to the fuselage skin 17, the calotte-shaped pressure bulkhead skin 19 can be conveniently and reliably connected to the inner flange 29.

Figs. 4 and 5, for example, show that in the embodiment, the first fitting 13 and the second fitting 23 abut against each other at the location 111 of the orbital joint. In the assembled state displayed, the first web 41 and the second web 42 extend parallel to each other. A first main surface 47 of the first web 41 is turned towards and contacts an opposing second main surface 48 of the second web 42. As seen in Fig. 5, in the embodiment, the location of the surface contact, where the webs 41, 42 abut along their surfaces 47, 48, coincides with the location 111 of the joint and extends substantially through the center of a small gap formed between the edges 12a, 12b of the fuselage skin portions 17a, 17b.

In the assembled junction 11, see Fig. 4, 5 in particular, the inner flange 29, which forms an integral part of the first fitting 13, extends over an inner end 43 of the second web 42 of the second fitting 23, and hence into the second fuselage section 2b. The inner end 43 is an end of the second web 42 that is distant from the second outer flange 32 to which the second web 42 is connected. Accordingly, in the junction 11, the first outer flange 31 is arranged on the inner side of the fuselage skin portion 17a of the first section 2a, but the inner flange 29 extends into the second section 2b at a distance from the fuselage skin portion 17b, and hence not at the level of the fuselage skin 17. In this way, pre-assembled sections 2a, 2b can be joined in a simple manner.

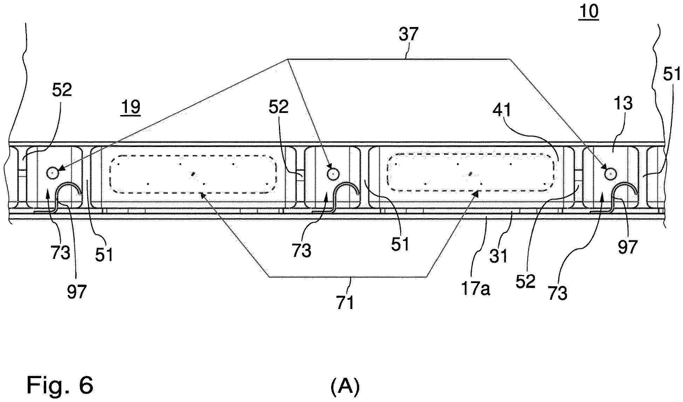

The first and second fittings 13, 23 are manufactured as separate parts. During the process of assembly of the fuselage 2, the first and second fitting 13, 23 are connected at least by a plurality of tension bolts 37, schematically shown in Fig. 5 and Fig. 6. The tension bolts 37 each extend through the first web 41 and the second web 42 so as to join the webs 41, 42 and thereby the fittings 13, 23.

The tension bolts 37 in particular may be configured as threaded bolts. For example, the tension bolts 37 each may comprise a head and a threaded shaft, and a nut may be provided to securely connect the first and second fittings 13, 23 using a threaded connection. The head may directly or indirectly abut on one of the webs 41, 42, while the nut may directly or indirectly abut on the other one of the webs 41, 42.

After assembly, in the state shown in Figs. 3-6, 9 and 7(b), the tension bolts 37 transfer at least tensile loads acting at the junction 11 between the fittings 13, 23. Preferably, the tensile loads supported and transferred by the plurality of tension bolts 37, e.g. via the respective head, shaft and nut thereof, may correspond to substantially the entire tensile load acting between the sections 2a, 2b across the junction 11 and across the edges 12a, 12b. The direction of the tensile loads transferred by the tension bolts 37 substantially corresponds to the longitudinal direction X of the fuselage 2.

The tension bolts 37 each for example may pass through an assigned through-hole in both the first and second web 41, 42. The through-hole may in particular be formed by drilling through both webs 41 and 42.

In variants of the embodiment, the tension bolt 37 and the assigned through-hole through which it passes may be configured with sufficient play, in such a manner that the tension bolts 37 substantially transmit tensile loads, or the tension bolt 37 and the through-hole may alternatively be configured, for example, for a snug fit or interference fit, whereby the tension bolts 37 also can transmit shear loads parallel to the webs 41, 42 between the first and second fittings 13, 23, in addition to the tensile loads acting transverse to the webs 41 and 42. Such shear loads may for example result from torsion loads coming from the rear fuselage. If transmission of shear loads is desired via the tension bolts 37, these may be provided with a shaft having an unthreaded portion.

In a variant, in case access to an interior of one of the sections 2a, 2b, or to a portion thereof, is limited or difficult in the step of joining the sections 2a, 2b, one of the webs 41, 42 that is easily accessible can be provided with a through hole, and the other one of the webs 41, 42 may be provided with a recess adapted to receive a barrel nut, for example. The recess in this variant in particular is configured such that into a transverse threaded hole of the barrel nut, a threaded shaft portion of the tension bolt 37, distal from the head thereof, can be screwed.

The first fitting 13 comprises a plurality of first ribs 51, 52 which extend transversely, in particular substantially perpendicularly, to the first outer flange 31 and the first web 41 and are integrally connected to the flange 31 and the web 41. The first ribs 51, 52 are arranged in pairs 103 each comprising one rib 51 and one rib 52. In particular, see Fig. 4, the ribs 51, 52 may alternate along the circumferential direction U of the fuselage 2 at the location 111.

The first ribs 51, 52 are spaced from each other along the circumferential direction U, the spacing being greater between consecutive pairs 103 than between the ribs 51 and 52 of the same pair 103.

Each rib 51 approximately has a shape of a triangular plate. Each rib 52 has a shape that comprises, in additional to a triangular base shape analogous to that of the rib 51, a tab 59 that extends the plate-like shape of the rib 52 on the side thereof directed toward an interior of the first fuselage section 2a. This is illustrated in Fig. 4 by a dash-dotted line. The function of the tab 59 is explained below.

At locations along the circumferential direction U which correspond to the positions of the first ribs 51 and 52, the second fitting 23 comprises a plurality of second ribs 53, arranged in pairs 106. In a manner substantially analogous to the first ribs 51, 52, the second ribs 53 extend transverse, in particular perpendicular, to the second web 42 and the second outer flange 32. The spacing of the second ribs 53 in the circumferential direction U corresponds to the spacing of the first ribs 51, 52. The second ribs 53 are integrally connected to the second web 42 and the second outer flange 32.

Different from the ribs 51, 52, the second ribs 53 of the second fitting 23 are each shaped in the same manner, and each have a triangular plate-type shape similar to that of the first ribs 51.

The ribs 51, 52, 53 provide support and stiffening of the fittings 13, 23 at the junction 11, where substantial loads are to be transmitted. Using the ribs 51, 52, 53, it becomes possible to transmit loads acting through the skin portions 17a, 17b more effectively from the outer flanges 31, 32 to the webs 41, 42 abutting on each other.

The tension bolts 37 are each arranged in a region 73 of the web 41 between the ribs 51, 52 of a pair 103 and in a corresponding region 74 of the web 42 between the ribs 53 of a pair 106. The pairs 103, 106 of ribs 51, 52, 53 help to effectively and evenly support the loads transmitted at the interface 11, in particular the tensile loads supported by the bolts 37.

Figs. 3-6 and 9 show that at least the first fuselage section 2a comprises a plurality of stringers 97 arranged spaced from each other along the circumferential direction U. A longitudinal axis 98 of each of the stringers 97 is oriented approximately transverse to the first web 41. A position of each stringer 97 along the circumferential direction U substantially corresponds to a circumferential position of one of the pairs 103, 106 of ribs. The position of the pairs 103, 106 is understood, in this embodiment, as being the position at approximately half the spacing between the ribs 51, 52 or 53 of the pair 103 or 106, respectively. The tension bolts 37 each are being arranged centrally between the ribs 51, 52 and 53, 53 of the corresponding pairs 103 and 106, respectively. The position of a web of the stringer 97 also may approximately correspond to the center between the ribs of each pair 103, 106, seen in the circumferential direction U. The arrangement of the stringers 97 in the embodiment helps to transmit loads exchanged at the interface of the first and second webs 41, 42, in particular through the tension bolts 37, even more efficiently to the skin 17.

Intermediate regions 71 of the first webs 41 between consecutive pairs 103, and intermediate regions 72 of the second webs 42 between consecutive pairs 106, are located at corresponding positions along the circumferential direction U. For transmitting shear loads in the plane defined by the main surfaces 47, 48 of the webs 41 and 42, the first and second fittings 13, 23 can additionally be connected in the intermediate regions 71, 72, in particular by fasteners extending through the first and second webs 41, 42, for example by rivets, or by shear bolts, for instance. Areas where the webs 41, 42 could be riveted within the intermediate regions 71, 72 are indicated in exemplary manner by dashed lines in Fig. 4 for a region 72 and in Fig. 6 for two consecutive regions 71.

A short distance ahead of the first fitting 13, the first fuselage section 2a comprises a frame 61 extending transverse to the stringers 97 and substantially in the circumferential direction U. In this embodiment, the frame 61 is formed with an elongated, profiled component having a substantially Z-shaped cross-section. The profiled component of the frame 61 is connected to the stringers 97 and to the skin portion 17a by a plurality of cleats 89. Each cleat 89 comprises a surface adapted for attachment to the frame 61, a further surface adapted for attachment to the skin portion 17a, and a further surface adapted for attachment to one of the stringers 97, see Figs. 3 and 5.

Moreover, the frame 61 is further connected to the first fitting 13 at a plurality of locations along the circumferential direction U by a plurality of cleats 67. Each cleat 67 connects a web of the frame 61 to an assigned one of the ribs 52 of the first fitting 13. In order to attach the cleat 67 to the rib 52, a first leg of the cleat 67 is connected to the tab 59, for example by fasteners, e.g. rivets. A second leg of the cleat 67 is connected to the web of the frame 61. The first and second legs of the cleat 67 in cooperation form an L-type shape, see in particular Fig. 4.

The cleat 67 bridges the distance between the frame 61 and the first fitting 13, the latter being positioned at the edge 12a of the skin portion 17a as explained above. The connection by the cleats 67 helps to stabilize the frame 61 against undesirable deformation under load.

In addition to the frame 61, the first fuselage section 2a may be provided with a number of further frames, running transverse to the stringers 97 and are not shown in the figures.

In the embodiment illustrated in the drawings, the first fitting 13, the frame 61, the cleats 67 and the cleats 89 are formed as separate, individual parts which are connected to each other in the manner described above during assembly of the fuselage section 2a, e.g. by riveting.

In order to further reduce the weight of the junction 11 and reduce the amount of work required for connecting the individual components, some or all of the fitting 13, frame 61 and cleats 67, 89 can be formed integrally with each other in variants of the embodiment. For example, the first fitting 13, the cleats 67 and the frame 61 could be formed integrally with each other, and, if desired, may also be formed integrally with the cleats 89. Alternatively, the cleats 67 might be formed integrally with the frame 61 and separate from the fitting 13.

Although not shown in the figures, the second section 2b can be provided with stringers and/or frames as well, in order to provide a stiffening structure for the skin portion 17b.

A method for forming the structural junction 11 according to the embodiment described above will be explained in the following.

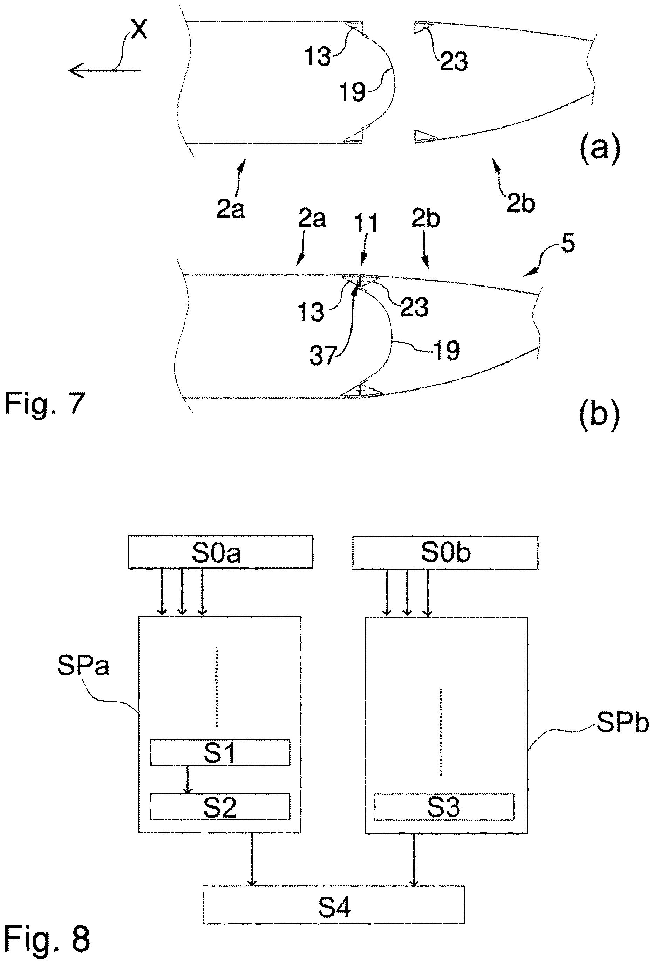

Various individual components for assembling the first and second sections 2a, 2b including the junction 11 are provided in steps S0a, S0b, schematically shown in Fig. 8.

More specifically, step S0a includes providing the first fitting 13 and the pressure bulkhead skin 19, while step S0b includes providing the second fitting 23.

In a first step S1, the first fitting 13 is attached to the fuselage skin portion 17a. This may be accomplished, for example, by connecting the first outer flange 31 to the skin portion 17a using rivets, not shown in the Figures.

In a second step S2, the pressure bulkhead skin 19 is attached to the inner flange 29 of the first fitting 13. This may be accomplished, for example, by connecting the overlapping inner flange 29 and edge portion of the bulkhead skin 19 using rivets.

Within a process of assembling the fuselage 2, the first and second steps S1, S2 is in particular part of a sub-process SPa of pre-assembling the first fuselage section 2a. The sub-process SPa may comprise further assembly steps, and in particular additionally comprises steps of providing the frame 61, connecting the frame 61 to the stringers 97 and to the skin portion 17a using the cleats 89, and connecting the frame 61 to the first fitting 13 via the tab 59, using the cleats 67.

In a third step S3, the second fitting 23 is attached to the fuselage skin portion 17b, for example also by riveting.

Fig. 5 shows that with the shape in particular of the first fitting 13, comprising the inner flange 29 extending over the inner end 43 of the second web 42, both the first outer flange 31 as well as the inner flange 29 can be accessed well by the worker for establishing the connection with the skin portion 17a and bulkhead skin 19, respectively, when pre-assembling the first section 2a.

Within the process of assembling the fuselage 2, the third step S3 is in particular part of a sub-process SPb of pre-assembling the second fuselage section 2b.

Sub-processes SPa and SPb may be performed in parallel.

In a fourth step S4, after pre-assembly of each of the first and second fuselage sections 2a and 2b has been completed, the first and second fuselage sections 2a and 2b are joined to form the junction 11, and the first fitting 13 and the second fitting 23 are connected at least using the tension bolts 37.

Further, the first and second fittings 13, 23 may be connected, as described above, in the intermediate regions 71, 72 by fasteners transmitting shear, in particular by rivets.

The orbital junction 11 between the sections 2a, 2b at the rear pressure bulkhead interface and the method of the embodiment thus make it possible to reduce the assembly lead time, as the first and second sections 2a, 2b can each be pre-assembled before joining them at the position of the rear pressure bulkhead 18. Thus, the number of components to be handled and connected during fuselage assembly can be reduced as well. Also, ergonomics for the workers during assembly of sections and of the fuselage is improved.

Fig. 7 schematical displays the step of joining the pre-assembled sections 2a and 2b, with Fig. 7 (a) showing both sections in their pre-assembled state before being joined via junction 11, and Fig. 7 (b) showing the sections 2a, 2b in a joined state in which the junction 11 is completed. The junction 11 makes it possible to conveniently pre-assemble both sections 2a, 2b in the tapering tail region of the fuselage 2, with the aid of the arrangement of the first and second main surfaces 47, 48 with respect to the edges 12a, 12b. In the assembled fuselage 2, substantially the entire longitudinal tensile load between the sections 2a and 2b will be supported by the tension bolts 37.

Although the invention has been completely described above with reference to preferred embodiments, the invention is not limited to these embodiments but may be modified in many ways.

For instance, even though the invention has been described above with reference to an embodiment in an aeroplane, the invention may also be useful in spacecraft construction.

### List of reference signs

- 1: aircraft
- 2: fuselage
- 2a: first fuselage section
- 2b: second fuselage section
- 3: nose
- 5: tail
- 7: wing
- 8: vertical stabilizer
- 9: horizontal stabilizer
- 10: inner space (fuselage)
- 11: orbital structural junction
- 12a: edge
- 12b: edge
- 13: first fitting
- 17: fuselage skin
- 17a: portion (fuselage skin)
- 17b: portion (fuselage skin)
- 18: rear pressure bulkhead
- 19: pressure bulkhead skin
- 23: second fitting
- 29: inner flange (first fitting)
- 31: first outer flange
- 32: second outer flange
- 37: tension bolt
- 41: first web
- 42: second web
- 43: inner end (second web)
- 47: first main surface (first web)
- 48: second main surface (second web)
- 51: first rib
- 52: first rib with tab
- 53: second rib
- 59: tab
- 61: frame
- 67: first cleat
- 71: intermediate region
- 72: intermediate region
- 73: region
- 74: region
- 89: second cleat
- 97: stringer
- 98: longitudinal axis (stringer)
- 103: pair of first rib and first rib with tab
- 106: pair of second ribs
- 111: location of joint
- U: circumferential direction
- X: longitudinal direction

- S0a: step
- S0b: step
- 51: step
- S2: step
- S3: step
- S4: step
- SPa: sub-process
- SPb: sub-process

## Claims

1. Aircraft or spacecraft fuselage (2) comprising a fuselage skin (17) and divided in at least a first and a second fuselage sections (2a, 2b) which, when assembled, form the fuselage (2), the fuselage (2) including a structural junction (11) which comprises
a first fitting (13) attached to a portion (17a) of the fuselage skin (17) in the first fuselage section (2a),
a second fitting (23) attached to a portion (17b) of the fuselage skin (17) in the second fuselage section (2b), and
a pressure bulkhead skin (19) attached to an inner flange (29) of the first fitting (13), the inner flange (29) being spaced apart from the fuselage skin (17) towards an inner space (10) enclosed by the fuselage skin (17) when the fuselage (2) is assembled;
wherein the pressure bulkhead skin (19) is, in use, a skin of a rear pressure bulkhead (18) of the aircraft or spacecraft (1), wherein with respect to the rear pressure bulkhead (18), the first fuselage section (2a) is a forward section and the second fuselage section (2b) is a rearward section;
wherein the first fitting (13) and the second fitting (23) are connected, during assembling of the fuselage (2), at least using a plurality of tension bolts (37), wherein the tension bolts (37) each are arranged and adapted to transfer at least tensile loads, in a direction across adjacent edges (12a, 12b) of the first and second fuselage sections (2a, 2b) in a region where the first and second fuselage sections (2a, 2b) are joined, between the first and second fittings (13, 23); and
wherein the first fitting (13) further comprises a first outer flange (31) for joining the first fitting (13) to the portion (17a) of the fuselage skin (17) in the first fuselage section (2a) and a first web (41) connecting the inner flange (29) and the first outer flange (31), and wherein the second fitting (23) comprises a second outer flange (32) for joining the second fitting (23) to the portion (17b) of the fuselage skin (17) in the second fuselage section (2b) and a second web (42) connected to the second outer flange (32).

2. Fuselage according to claim 1,
**characterized in that** the inner flange (29) of the first fitting (13) obliquely extends with respect to the first web (41) to which it is connected.

3. Fuselage according to claim 1 or 2,
**characterized in that** the first web (41) of the first fitting (13) and the second web (42) of the second fitting (23) extend substantially parallel to each other and/or contact each other along a first main surface of the first web (41) and a second main surface of the second web (42).

4. Fuselage according to any one of the preceding claims,
**characterized in that** the tension bolts (37) each extend through the first web (41) and through the second web (42) in such a manner as to join the first and second webs (41, 42), wherein in a state in which the first and second fittings (13, 23) are connected at least by the tension bolts (37), the first and second webs (41, 42) abut against each other and the inner flange (29) of the first fitting (13) preferably extends over an inner end (43) of the second web (42) of the second fitting (23).

5. Fuselage according to any one of the preceding claims,
**characterized in that** a location (111) at which the fuselage skin portions (17a, 17b) of the first and second fuselage sections (2a, 2b) adjoin each other substantially corresponds to a location (111) where the first and second webs (41, 42) abut against each other.

6. Fuselage according to any one of the preceding claims,
**characterized in that** the first fitting (13) comprises a plurality of first ribs (51, 52) arranged transverse to the first web (41) and the first outer flange (31) and/or the second fitting (23) comprises a plurality of second ribs (53) arranged transverse to the second web (42) and the second outer flange (32), wherein the first and/or second ribs (51, 52, 53) are arranged along a circumferential direction (U) of the fuselage (2), in the region where the first and second fuselage sections (2a, 2b) are joined, so as to form pairs (103, 106) of first and/or second ribs, wherein the first ribs (51, 52) and the second ribs (53) preferably are formed at corresponding locations along the circumferential direction (U), and wherein further preferably a tension bolt (37) is arranged in a region (73, 74) of the first and second webs (41, 42) between the ribs of one of the pairs (103, 106).

7. Fuselage according to claim 6,
**characterized in that** at least the first fuselage section (2a) further comprises a plurality of stringers (97) arranged spaced from each other along the circumferential direction (U) of the fuselage (2), a longitudinal axis (98) of each of the stringers (97) being oriented substantially transverse to the first fitting (13), wherein a position of each of the stringers (97) along the circumferential direction (U) substantially corresponds to a circumferential position of one of the pairs (103, 106) of ribs (51, 52, 53).

8. Fuselage according to claim 6 or 7,
**characterized in that** the pairs (103) of first ribs (51, 52) and the pairs (106) of second ribs (53) each are spaced from one another in the circumferential direction (U), whereby intermediate regions (71, 72) of the first and second webs (41, 42) between consecutive pairs (103, 106) of ribs are defined, wherein the first and second webs (41, 42) are additionally joined in the intermediate regions (71, 72) in a manner essentially transmitting shear between the first and second webs (41, 42).

9. Fuselage according to any one of the preceding claims,
**characterized in that** the first fitting (13) and the second fitting (23) are parts which are configured to be structurally connected to each other at least by the tension bolts (37), wherein the first and second fittings (13, 23) and the tension bolts (37) are configured in a manner enabling the tension bolts (37) to transmit tensile loads or to transmit tensile loads and shear loads.

10. Fuselage according to any one of the preceding claims,
**characterized in that** the first fitting (13) and/or the second fitting (23) is/are each formed elongate and in particular is/are arranged in such a manner as to substantially extend along a circumferential direction (U) of the fuselage (2).

11. Fuselage according to any one of the preceding claims,
**characterized in that** the first fuselage section (2a) comprises a frame (61) arranged next to the first fitting (13) and in such a manner as to extend substantially along a circumferential direction (U) of the fuselage (2), wherein the frame (61) is arranged spaced from the first fitting (13) by a distance and is connected to the first fitting (13) at a plurality of locations along the circumferential direction (U), in particular by a plurality of cleats (67) bridging the distance between the frame (61) and the first fitting (13).

12. Aircraft or spacecraft (1) comprising a fuselage (2) according to any one of the preceding claims.

13. Method of forming a structural junction (11) in an aircraft or spacecraft fuselage (2), comprising steps of:
providing (S0a) a first fitting (13) and a pressure bulkhead skin (19),
wherein the first fitting (13) comprises an inner flange (29), a first outer flange (31) and a first web (41) connecting the inner flange (29) and the first outer flange (31), and wherein the pressure bulkhead skin (19) is a skin of a rear pressure bulkhead (18) of an aircraft or spacecraft (1);
providing (S0b) a second fitting (23), wherein the second fitting (23) comprises a second outer flange (32) and a second web (42) connected to the second outer flange (32);
attaching (S1) the first fitting (13) to a portion (17a) of a fuselage skin (17) in a first fuselage section (2a), wherein the first fitting (13) is being joined via the first outer flange (31) to the portion (17a) of the fuselage skin (17) in the first fuselage section (2a);
attaching (S2) the pressure bulkhead skin (19) to the inner flange (29) of the first fitting (13), the inner flange (29) being spaced apart from the fuselage skin (17) towards an inner space (10) of the fuselage (2);
attaching (S3) the second fitting (23) to a portion (17b) of the fuselage skin (17) in a second fuselage section (2b), wherein the second fitting (23) is being joined via the second outer flange (32) to the portion (17b) of the fuselage skin (17) in the second fuselage section (2b); and
joining (S4) the first and second fuselage sections (2a, 2b) and connecting the first fitting (13) and the second fitting (23) at least using a plurality of tension bolts (37);
wherein with respect to the rear pressure bulkhead (18), the first fuselage section (2a) is a forward section and the second fuselage section (2b) is a rearward section; and
wherein the tension bolts (37) each are being arranged and are adapted to transfer at least tensile loads, in a direction across adjacent edges (12a, 12b) of the first and second fuselage sections (2a, 2b) in a region where the first and second fuselage sections (2a, 2b) are being joined, between the first and second fittings (13, 23).

## Patentansprüche

1. Luftfahrzeug- oder Raumfahrzeugrumpf (2), der eine Rumpfhaut (17) umfasst und in mindestens eine erste und eine zweite Rumpfsektion (2a, 2b) unterteilt ist, die im zusammengebauten Zustand den Rumpf (2) bilden, wobei der Rumpf (2) eine strukturelle Verbindung (11) aufweist, die Folgendes umfasst
ein erstes Anschlussstück (13), das an einem Abschnitt (17a) der Rumpfhaut (17) in der ersten Rumpfsektion (2a) angebracht ist,
ein zweites Anschlussstück (23), das an einem Abschnitt (17b) der Rumpfhaut (17) in der zweiten Rumpfsektion (2b) angebracht ist, und
eine Druckschotthaut (19), die an einem Innenflansch (29) des ersten Anschlussstücks (13) angebracht ist, wobei der Innenflansch (29) von der Rumpfhaut (17) hin zu einem Innenraum (10) beabstandet ist, der bei zusammengebautem Rumpf (2) von der Rumpfhaut (17) umschlossen ist;
wobei die Druckschotthaut (19) bei Verwendung eine Haut eines hinteren Druckschotts (18) des Luftfahrzeugs oder Raumfahrzeugs (1) ist, wobei in Bezug auf das hintere Druckschott (18) die erste Rumpfsektion (2a) eine vordere Sektion ist und die zweite Rumpfsektion (2b) eine hintere Sektion ist;
wobei das erste Anschlussstück (13) und das zweite Anschlussstück (23) beim Zusammenbauen des Rumpfs (2) zumindest unter Verwendung einer Mehrzahl von Zugbolzen (37) verbunden werden,
wobei die Zugbolzen (37) jeweils derart angeordnet und ausgelegt sind, dass sie zumindest Zuglasten in einer Richtung über angrenzende Kanten (12a, 12b) der ersten und der zweiten Rumpfsektion (2a, 2b) in einem Bereich, in dem die erste und die zweite Rumpfsektion (2a, 2b) zusammengefügt sind, zwischen dem ersten und dem zweiten Anschlussstück (13, 23) verlagern; und
wobei das erste Anschlussstück (13) ferner einen ersten Außenflansch (31) zum Fügen des ersten Anschlussstücks (13) an den Abschnitt (17a) der Rumpfhaut (17) in der ersten Rumpfsektion (2a) und einen ersten Steg (41), der den Innenflansch (29) und den ersten Außenflansch (31) verbindet, umfasst, und wobei das zweite Anschlussstück (23) einen zweiten Außenflansch (32) zum Fügen des zweiten Anschlussstücks (23) an den Abschnitt (17b) der Rumpfhaut (17) in der zweiten Rumpfsektion (2b) und einen mit dem zweiten Außenflansch (32) verbundenen zweiten Steg (42) umfasst.

2. Rumpf nach Anspruch 1,
**dadurch gekennzeichnet, dass** sich der Innenflansch (29) des ersten Anschlussstücks (13) in Bezug auf den ersten Steg (41), mit dem er verbunden ist, schräg erstreckt.

3. Rumpf nach Anspruch 1 oder 2,
**dadurch gekennzeichnet, dass** sich der erste Steg (41) des ersten Anschlussstücks (13) und der zweite Steg (42) des zweiten Anschlussstücks (23) im Wesentlichen parallel zueinander erstrecken und/oder sich entlang einer ersten Hauptfläche des ersten Stegs (41) und einer zweiten Hauptfläche des zweiten Stegs (42) berühren.

4. Rumpf nach einem der vorhergehenden Ansprüche, **dadurch gekennzeichnet, dass** sich die Zugbolzen (37) jeweils durch den ersten Steg (41) und durch den zweiten Steg (42) derart erstrecken, dass sie den ersten und den zweiten Steg (41, 42) zusammenfügen, wobei in einem Zustand, in dem das erste und das zweite Anschlussstück (13, 23) zumindest durch die Zugbolzen (37) verbunden sind, der erste und der zweite Steg (41, 42) aneinander anliegen und sich der Innenflansch (29) des ersten Anschlussstücks (13) vorzugsweise über ein inneres Ende (43) des zweiten Stegs (42) des zweiten Anschlussstücks (23) erstreckt.

5. Rumpf nach einem der vorhergehenden Ansprüche, **dadurch gekennzeichnet, dass** eine Stelle (111), an der die Rumpfhautabschnitte (17a, 17b) der ersten und der zweiten Rumpfsektion (2a, 2b) aneinandergrenzen, im Wesentlichen einer Stelle (111) entspricht, an der der erste und der zweite Steg (41, 42) aneinander anliegen.

6. Rumpf nach einem der vorhergehenden Ansprüche, **dadurch gekennzeichnet, dass** das erste Anschlussstück (13) eine Mehrzahl von ersten Rippen (51, 52) umfasst, die quer zu dem ersten Steg (41) und dem ersten Außenflansch (31) angeordnet sind, und/oder das zweite Anschlussstück (23) eine Mehrzahl von zweiten Rippen (53) umfasst, die quer zu dem zweiten Steg (42) und dem zweiten Außenflansch (32) angeordnet sind, wobei die ersten und/oder die zweiten Rippen (51, 52, 53) entlang einer Umfangsrichtung (U) des Rumpfs (2) in dem Bereich angeordnet sind, in dem die erste und die zweite Rumpfsektion (2a, 2b) zusammengefügt sind, so dass sie Paare (103, 106) von ersten und/oder zweiten Rippen bilden, wobei die erste Rippen (51, 52) und die zweiten Rippen (53) vorzugsweise an entsprechenden Stellen entlang der Umfangsrichtung (U) gebildet sind, und wobei ferner vorzugsweise ein Zugbolzen (37) in einem Bereich (73, 74) des ersten und des zweiten Stegs (41, 42) zwischen den Rippen eines der Paare (103, 106) angeordnet ist.

7. Rumpf nach Anspruch 6,
**dadurch gekennzeichnet, dass** zumindest die erste Rumpfsektion (2a) ferner eine Mehrzahl von Stringern (97) umfasst, die entlang der Umfangsrichtung (U) des Rumpfs (2) voneinander beabstandet angeordnet sind, wobei eine Längsachse (98) jedes der Stringer (97) im Wesentlichen quer zu dem ersten Anschlussstück (13) ausgerichtet ist, wobei eine Position jedes der Stringer (97) entlang der Umfangsrichtung (U) im Wesentlichen einer Umfangsposition eines der Paare (103, 106) von Rippen (51, 52, 53) entspricht.

8. Rumpf nach Anspruch 6 oder 7,
**dadurch gekennzeichnet, dass** die Paare (103) von ersten Rippen (51, 52) und die Paare (106) von zweiten Rippen (53) jeweils in der Umfangsrichtung (U) voneinander beabstandet sind, wobei Zwischenbereiche (71, 72) des ersten und des zweiten Stegs (41, 42) zwischen aufeinanderfolgenden Paaren (103, 106) von Rippen definiert sind, wobei der erste und der zweite Steg (41, 42) zusätzlich in den Zwischenbereichen (71, 72) derart zusammengefügt sind, dass eine Scherkraft zwischen dem ersten und dem zweiten Steg (41, 42) im Wesentlichen übertragen wird.

9. Rumpf nach einem der vorhergehenden Ansprüche, **dadurch gekennzeichnet, dass** das erste Anschlussstück (13) und das zweite Anschlussstück (23) Teile sind, die dazu ausgestaltet sind, strukturell zumindest durch die Zugbolzen (37) miteinander verbunden zu sein, wobei das erste und das zweite Anschlussstück (13, 23) und die Zugbolzen (37) derart ausgestaltet sind, dass die Zugbolzen (37) Zuglasten übertragen können oder Zuglasten und Scherlasten übertragen können.

10. Rumpf nach einem der vorhergehenden Ansprüche, **dadurch gekennzeichnet, dass** das erste Anschlussstück (13) und/oder das zweite Anschlussstück (23) jeweils länglich gebildet ist/sind und insbesondere derart angeordnet ist/sind, dass sie sich im Wesentlichen entlang einer Umfangsrichtung (U) des Rumpfs (2) erstrecken.

11. Rumpf nach einem der vorhergehenden Ansprüche,
**dadurch gekennzeichnet, dass** die erste Rumpfsektion (2a) einen Spant (61) umfasst, der neben dem ersten Anschlussstück (13) und derart angeordnet ist, dass er sich im Wesentlichen entlang einer Umfangsrichtung (U) des Rumpfs (2) erstreckt, wobei der Spant (61) von dem ersten Anschlussstück (13) um einen Abstand beabstandet angeordnet ist und mit dem ersten Anschlussstück (13) an einer Mehrzahl von Stellen entlang der Umfangsrichtung (U) insbesondere durch eine Mehrzahl von Klammern (67), die den Abstand zwischen dem Spant (61) und dem ersten Anschlussstück (13) überbrücken, verbunden ist.

12. Luftfahrzeug oder Raumfahrzeug (1), das einen Rumpf (2) nach einem der vorhergehenden Ansprüche umfasst.

13. Verfahren zum Bilden einer strukturellen Verbindung (11) in einem Luftfahrzeug- oder Raumfahrzeugrumpf (2), das die folgenden Schritte umfasst:
Bereitstellen (S0a) eines erstes Anschlussstücks (13) und einer Druckschotthaut (19), wobei das erste Anschlussstück (13) einen Innenflansch (29), einen ersten Außenflansch (31) und einen ersten Steg (41), der den Innenflansch (29) und den ersten Außenflansch (31) verbindet, umfasst, und wobei die Druckschotthaut (19) eine Haut eines hinteren Druckschotts (18) eines Luftfahrzeugs oder Raumfahrzeugs (1) ist;
Bereitstellen (S0b) eines zweiten Anschlussstücks (23), wobei das zweite Anschlussstück (23) einen zweiten Außenflansch (32) und einen mit dem zweiten Außenflansch (32) verbundenen zweiten Steg (42) umfasst;
Anbringen (S1) des ersten Anschlussstücks (13) an einem Abschnitt (17a) einer Rumpfhaut (17) in einer ersten Rumpfsektion (2a), wobei das erste Anschlussstück (13) über den ersten Außenflansch (31) an den Abschnitt (17a) der Rumpfhaut (17) in der ersten Rumpfsektion (2a) gefügt wird;
Anbringen (S2) der Druckschotthaut (19) an dem Innenflansch (29) des ersten Anschlussstücks (13), wobei der Innenflansch (29) von der Rumpfhaut (17) hin zu einem Innenraum (10) des Rumpfs (2) beabstandet ist;
Anbringen (S3) des zweiten Anschlussstücks (23) an einem Abschnitt (17b) der Rumpfhaut (17) in einer zweiten Rumpfsektion (2b), wobei das zweite Anschlussstück (23) über den zweiten Außenflansch (32) an den Abschnitt (17b) der Rumpfhaut (17) in der zweiten Rumpfsektion (2b) gefügt wird; und
Zusammenfügen (S4) der ersten und der zweiten Rumpfsektion (2a, 2b) und Verbinden des ersten Anschlussstücks (13) und des zweiten Anschlussstücks (23) zumindest unter Verwendung einer Mehrzahl von Zugbolzen (37) ;
wobei in Bezug auf das hintere Druckschott (18) die erste Rumpfsektion (2a) eine vordere Sektion ist und die zweite Rumpfsektion (2b) eine hintere Sektion ist; und
wobei die Zugbolzen (37) jeweils derart angeordnet werden und ausgelegt sind, dass sie zumindest Zuglasten in einer Richtung über angrenzende Kanten (12a, 12b) der ersten und der zweiten Rumpfsektion (2a, 2b) in einem Bereich, in dem die erste und die zweite Rumpfsektion (2a, 2b) zusammengefügt werden, zwischen dem ersten und dem zweiten Anschlussstück (13, 23) verlagern.

## Revendications

1. Fuselage (2) d'aéronef ou d'astronef comportant un revêtement (17) de fuselage et divisé en au moins une première et une seconde section (2a, 2b) de fuselage qui, lorsqu'elles sont assemblées, forment le fuselage (2), le fuselage (2) incluant une jonction structurelle (11) qui comporte
une première ferrure (13) fixée à une partie (17a) du revêtement (17) de fuselage dans la première section (2a) de fuselage,
une seconde ferrure (23) fixée à une partie (17b) du revêtement (17) de fuselage dans la seconde section (2b) de fuselage, et
un revêtement (19) de cloison étanche fixée à une joue intérieure (29) de la première ferrure (13), la joue intérieure (29) étant espacée par rapport au revêtement (17) de fuselage en direction d'un espace intérieur (10) délimité par le revêtement (17) de fuselage lorsque le fuselage (2) est assemblé ;
le revêtement (19) de cloison étanche étant, en cours d'utilisation, un revêtement d'une cloison étanche arrière (18) de l'aéronef ou de l'astronef (1), par rapport à la cloison étanche arrière (18), la première section (2a) de fuselage étant une section située en avant et la seconde section (2b) de fuselage étant une section située en arrière ;
la première ferrure (13) et la seconde ferrure (23) étant liées, pendant l'assemblage du fuselage (2), au moins à l'aide d'une pluralité de boulons (37) de traction, chacun des boulons (37) de traction étant disposé et prévu pour transférer au moins des charges de traction, dans une direction transverse à des bords adjacents (12a, 12b) des première et seconde sections (2a, 2b) de fuselage dans une région où les première et seconde sections (2a, 2b) de fuselage sont jointes, entre les première et seconde ferrures (13, 23) ; et
la première ferrure (13) comportant en outre une première joue extérieure (31) servant à joindre la première ferrure (13) à la partie (17a) du revêtement (17) de fuselage dans la première section (2a) de fuselage et une première âme (41) reliant la joue intérieure (29) et la première joue extérieure (31), et la seconde ferrure (23) comportant une seconde joue extérieure (32) servant à joindre la seconde ferrure (23) à la partie (17b) du revêtement (17) de fuselage dans la seconde section (2b) de fuselage et une seconde âme (42) reliée à la seconde joue extérieure (32).

2. Fuselage selon la revendication 1,
**caractérisé en ce que** la joue intérieure (29) de la première ferrure (13) s'étend obliquement par rapport à la première âme (41) à laquelle elle est reliée.

3. Fuselage selon les revendications 1 ou 2,
**caractérisé en ce que** la première âme (41) de la première ferrure (13) et la seconde âme (42) de la seconde ferrure (23) s'étendent sensiblement parallèlement l'une à l'autre et/ou se touchent le long d'une première surface principale de la première âme (41) et d'une seconde surface principale de la seconde âme (42).

4. Fuselage selon l'une quelconque des revendications précédentes,
**caractérisé en ce que** chacun des boulons (37) de traction s'étend à travers la première âme (41) et à travers la seconde âme (42) de manière à joindre les première et seconde âmes (41, 42), dans un état où les première et seconde ferrures (13, 23) sont liées au moins par les boulons (37) de traction, les première et seconde âmes (41, 42) prenant appui l'une contre l'autre et la joue intérieure (29) de la première ferrure (13) s'étendant de préférence par-dessus une extrémité intérieure (43) de la seconde âme (42) de la seconde ferrure (23).

5. Fuselage selon l'une quelconque des revendications précédentes,
**caractérisé en ce qu'**un emplacement (111) où les parties (17a, 17b) de revêtement de fuselage des première et seconde sections (2a, 2b) de fuselage se jouxtent correspond sensiblement à un emplacement (111) où les première et seconde âmes (41, 42) prennent appui l'une contre l'autre.

6. Fuselage selon l'une quelconque des revendications précédentes,
**caractérisé en ce que** la première ferrure (13) comporte une pluralité de premières nervures (51, 52) disposées transversalement à la première âme (41) et à la première joue extérieure (31) et/ou la seconde ferrure (23) comporte une pluralité de secondes nervures (53) disposées transversalement à la seconde âme (42) et à la seconde joue extérieure (32), les premières et/ou secondes nervures (51, 52, 53) étant disposées suivant une direction circonférentielle (U) du fuselage (2), dans la région où les première et seconde sections (2a, 2b) de fuselage sont jointes, de façon à former des paires (103, 106) de premières et/ou de secondes nervures, les premières nervures (51, 52) et les secondes nervures (53) étant de préférence formées à des emplacements correspondants suivant la direction circonférentielle (U), et un boulon (37) de traction étant en outre de préférence disposé dans une région (73, 74) des première et seconde âmes (41, 42) entre les nervures d'une des paires (103, 106).

7. Fuselage selon la revendication 6,
**caractérisé en ce qu'**au moins la première section (2a) de fuselage comporte en outre une pluralité de lisses (97) disposées de façon espacée les unes par rapport aux autres suivant la direction circonférentielle (U) du fuselage (2), un axe longitudinal (98) de chacune des lisses (97) étant orienté sensiblement transversalement à la première ferrure (13), une position de chacune des lisses (97) suivant la direction circonférentielle (U) correspondant sensiblement à une position circonférentielle d'une des paires (103, 106) de nervures (51, 52, 53).

8. Fuselage selon les revendications 6 ou 7,
**caractérisé en ce que** les paires (103) de premières nervures (51, 52) et les paires (106) de secondes nervures (53) sont chacune espacée les unes par rapport aux autres dans la direction circonférentielle (U), des régions intermédiaires (71, 72) des première et seconde âmes (41, 42) entre des paires consécutives (103, 106) de nervures étant ainsi définies, les première et seconde âmes (41, 42) étant de plus jointes dans les régions intermédiaires (71, 72) d'une manière transmettant essentiellement le cisaillement entre les première et seconde âmes (41, 42).

9. Fuselage selon l'une quelconque des revendications précédentes,
**caractérisé en ce que** la première ferrure (13) et la seconde ferrure (23) sont des pièces qui sont configurées pour être reliées structurellement l'une à l'autre au moins par les boulons (37) de traction, les première et seconde ferrures (13, 23) et les boulons (37) de traction étant configurés d'une manière permettant aux boulons (37) de traction de transmettre des charges de traction ou de transmettre des charges de traction et des charges de cisaillement.

10. Fuselage selon l'une quelconque des revendications précédentes,
**caractérisé en ce que** la première ferrure (13) et/ou la seconde ferrure (23) est/sont formée(s) chacune de façon allongée et en particulier est/sont disposée(s) de manière à s'étendre sensiblement suivant une direction circonférentielle (U) du fuselage (2).

11. Fuselage selon l'une quelconque des revendications précédentes,
**caractérisé en ce que** la première section (2a) de fuselage comporte un cadre (61) disposé près de la première ferrure (13) et de manière à s'étendre sensiblement suivant une direction circonférentielle (U) du fuselage (2), le cadre (61) étant disposé écarté de la première ferrure (13) d'une certaine distance et étant relié à la première ferrure (13) à une pluralité d'emplacements suivant la direction circonférentielle (U), en particulier par une pluralité d'étais (67) franchissant la distance entre le cadre (61) et la première ferrure (13).

12. Aéronef ou astronef (1) comportant un fuselage (2) selon l'une quelconque des revendications précédentes.

13. Procédé de formation d'une jonction structurelle (11) dans un fuselage (2) d'aéronef ou d'astronef, comportant les étapes consistant à :
mettre en place (S0a) une première ferrure (13) et un revêtement (19) de cloison étanche, la première ferrure (13) comportant une joue intérieure (29), une première joue extérieure (31) et une première âme (41) reliant la joue intérieure (29) et la première joue extérieure (31), et le revêtement (19) de cloison étanche étant un revêtement d'une cloison étanche arrière (18) d'un aéronef ou d'un astronef (1) ;
mettre en place (S0b) une seconde ferrure (23), la seconde ferrure (23) comportant une seconde joue extérieure (32) et une seconde âme (42) reliée à la seconde joue extérieure (32) ;
fixer (S1) la première ferrure (13) à une partie (17a) d'un revêtement (17) de fuselage dans une première section (2a) de fuselage, la première ferrure (13) étant jointe par l'intermédiaire de la première joue extérieure (31) à la partie (17a) du revêtement (17) de fuselage dans la première section (2a) de fuselage ;
fixer (S2) le revêtement (19) de cloison étanche à la joue intérieure (29) de la première ferrure (13), la joue intérieure (29) étant espacée par rapport au revêtement (17) de fuselage en direction d'un espace intérieur (10) du fuselage (2) ;
fixer (S3) la seconde ferrure (23) à une partie (17b) du revêtement (17) de fuselage dans une seconde section (2b) de fuselage, la seconde ferrure (23) étant jointe par l'intermédiaire de la seconde joue extérieure (32) à la partie (17b) du revêtement (17) de fuselage dans la seconde section (2b) de fuselage ; et
joindre (S4) les première et seconde sections (2a, 2b) de fuselage et relier la première ferrure (13) et la seconde ferrure (23) au moins à l'aide d'une pluralité de boulons (37) de traction ;
par rapport à la cloison étanche arrière (18), la première section (2a) de fuselage étant une section située en avant et la seconde section (2b) de fuselage étant une section située en arrière ; et
chacun des boulons (37) de traction étant disposé et prévu pour transférer au moins des charges de traction, dans une direction transverse à des bords adjacents (12a, 12b) des première et seconde sections (2a, 2b) de fuselage dans une région où les première et seconde sections (2a, 2b) de fuselage sont jointes, entre les première et seconde ferrures (13, 23).
